# EUROPEAN PATENT APPLICATION

(11) **EP 2 068 078 A1**
(43) Date of publication of application: **10.06.2009**
(21) Application number: 06799441.8
(22) Date of filing: 04.09.2006
(51) Int. Cl.: F23D 1/06

(54) **METHOD AND BURNER FOR BURNING SOLID FUELS**

(71) Applicant: Vitro Global, S.A., Route André-Pillier 33a 1762 Givisiez (CH)
(72) Inventor: OLIN NUÑEZ, Miguel, Angel, 66410 Monterrey, Nuevo León (MX); VALADEZ CASTILLO, Rafael, 66256 Gerza García, Nuevo León (MX); ALANIS RAMIREZ, Tomás, 66450 San Nicolás de los Garza, Nuevo León (MX)
(74) Representative: Altenburg, Udo
(86) International application number: PCT/MX2006/000094
(87) International publication number: WO 2008/030074

(57) **Abstract**

The present invention relates to a burner and to a method for burning solid fuels, which comprises a tube for the supply of a flow of solid fuel; a first chamber that has an inlet and an outlet, the inlet of said chamber being connected to said tube for receiving the flow of solid fuel at a first supply rate and for increasing the rate of the supply flow of the solid fuel at the outlet from said first chamber of the burner; and a second chamber connected to the outlet of the first chamber for receiving the faster flow of solid fuel and projecting a flat flame towards a melting chamber of the glass melting furnace, with a high solid-fuel combustion efficiency and low CO and NOx emissions.

## Description

### FIELD OF THE INVENTION

The present invention is related with the burning of solid fuels in a glass melting furnace and, more specifically to a burner and a method to burns solid fuels for the melting of glass, for metallic or non-metallic materials, for generating vapor and/or other applications.

### BACKGROUND OF THE INVENTION

Melting glass has been done in different kinds of furnaces and of the types of fuels, depending on the final characteristics of the product and also regarding the thermal efficiency of the melting and refining processes. Unit melter furnaces have been used to melt glass (by means of gas fuel), these furnaces have several burners along the sides of the furnace, the whole unit looks like a close box where there is a chimney that can be placed either in the beginning of the feeder or at the very end of the furnace, it means, going downstream. However there is an enormous heat loss in the glass leaving high-temperature operating furnaces. At 2500° F, for example, the heat in the flue gases is 62 per cent of the heat input for a natural gas fired furnace.

In order to take advantage of the remaining heat of the flue gases, a more sophisticated and expensive design come out, named as the regenerative furnace. It is well known that, to operate a regenerative glass melting furnace, a plurality of gas burners is associated with a pair of sealed regenerators disposed side-by-side. Each regenerator has a lower chamber, a refractory structure above the lower chamber and an upper chamber above the structure. Each regenerator has a respective port connecting the respective upper chamber with a melting and refining chamber of the furnace. The burners are arranged to burn fuel, such as natural gas, liquid petroleum, fuel oil or other gaseous or liquid fuels which are suitable for use in the glass melting furnace and thereby supply heat for melting and refining the glass making materials in the chamber. The melting and refining chamber is fed with glass making materials at one end thereof at which is located a doghouse and has a molten distributor disposed at the other end thereof, which comprises a series of ports through which molten glass may be removed from the melting and refining chamber.

The burners may be mounted in a number of possible configurations, for example a through-port configuration, a side-port configuration or an under-port configuration. Fuel, e.g. natural gas, is fed from the burner into the incoming stream of pre-heated air coming from each regenerator during the firing cycle, and the resultant flame and products of combustion produced in that flame extend across the surface of the melting glass, and transfer heat to that glass in the melting and refining chamber.

In operation, the regenerators are cycled alternately between combustion air and exhaust heat cycles. Every 20 minutes, or 30 minutes, depending on the specific furnaces, the path of the flame is reversed. The objective of each regenerator is to store the exhausted heat, which allows a greater efficiency and a higher flame temperature that could otherwise be the case with cold air.

For operating the glass melting furnace, the fuel fed to the burners and the combustion air supplied is controlled by measuring at the port mouth and the top of the structure, the quantity of oxygen and combustible material present so as to ensure that within the melting chamber or at points along the melting chamber, the combustion air fed is less than that required for complete combustion of the fuel being supplied.

However, the continuing upward spiral of energy costs (primarily natural gas) had forced the major float glass manufacturers to add "surcharges".

Before the economical and finance suspense of the markets, the price of natural gas has observed periods of high volatility. For many companies the gas natural has turned in a strategic input which impact has influenced the operation costs and therefore the financial performance. For this reason, the search of alternate fuels has turned priority for diverse companies and many of these fuels are solid.

Many types of coal, petroleum coke and another type of solid materials can be burned in pulverized form and on having been burned in a furnace, to produce heat for diverse industrial applications.

One of the main problems to use solid fuels as energetic is related to the design of burners, in order that they can present high efficiencies of combustion, flames adapted for the operation, high energy efficiencies and non-accumulation of materials by an bad burn of the solid fuel.

Furthermore, these problems can cause high emissions of CO and/or particles (basically the generation of NOx is reduced in the operation of coke for the minor temperature of flames achieved by the fuel) and it is necessary to add that the costs both of operation and of the design and manufacture of this type of burners it is very high.

At present, already exists some systems of burned that have been developed for the burning of solid fuel as coal or petroleum coke, as example, the PCT application PCT/EP83/00036 of Uwe Wiedmann et al, published on September 1, 1983, describes a burner for pulvurulent, gaseous and/or liquid fuels. This burner has an ignition chamber with a wall, which opens out and having the rotation symmetry, as well as an exhaust pipe connected thereto. At the center of the chamber wall, there is arranged the inlet of a pipe for the admission of a fuel jet as well as an air supply surrounding said inlet for the admission of a vortex of combustion air which produces, inside the ignition chamber, a hot recirculation stream mixing the fuel jet and heating the latter at the ignition temperature. The air quantity of the vortex supplied to the ignition chamber is only a portion of the total combustion air required. In the area between the chamber wall and the exhaust pipe there is provided a second air admission pipe through which another portion of the combustion air may be introduced in the ignition chamber, said portion being totally or partially mixed with the fuel jet. The sum of the combustion air portions participating within the ignition chamber to the mixture with the fuel jet (a hence to the ignition and initiation of the combustion) is adjusted so as not exceed 50% of the total combustion air required. By conjugating all those measures, there is provided a burner particularly appropriate for the production of heat for industrial process and further having at intermediary and variable power rates a stable ignition producing a flame with an elongate and thin form in the combustion chamber and thus with a low radial deflection of particles.

The US patent No. 4412810 issued to Akira Izuha et al, on November 1, 1983, is related to a pulverized coal burner capable of carrying out combustion in a stable state with a reduction in the amounts of of NOx, Co, and unburned carbon produced as the result of the combustion.

The US Patent No. 4531461 issued to William H. Sayler on July 30, 1985, is related to a system for pulverizing and burning solid fuel, such as coal or other fossil fuel, and for burning such pulverized fuels suspended in a stream of air, principally in connection with industrial furnaces such as those used to heat gypsum-processing kettles and metallurgical furnaces.

The US patent 4602575 issued to Klaus Grethe on July 29, 1986, is related a Method of burning petroleum coke dust in a burner flame having an intensive internal recirculation zone. The petroleum coke dust is supplied to that region of the intensive recirculation zone which provided the ignition energy for the petroleum coke dust which is to be burned. However, this patent describes that, depending upon the type of processing which the crude oil has undergone, the petroleum coke can contain harfuml materials such as, vanadium which not only lead to corrosive compounds during combustion in steam generators, but furthermore considerably pollute the environment when they leave the "steam generator" with the flue gas. Suggest that, when this burner is used, these negatives effects or harfuml occurrences can be extensively avoided by adding vanadium-binding additives to the combustion via the incremental of air.

Another development on coal burners is illustrated in the US patent No. 4924784 issued to Dennis R. Lennon et al, on May 15, 1990, which is related to the firing of pulverized solvent refined coal in a burner for a "boiler or the like".

Finally, the US patent No. 5829367 issued to Hideaki Ohta et al, on November 3, 1998, is related a burner for combustion of a pulverized coal mixture having two kinds of rich and lean concentration has a height of a burner panel of a burner panel reduced and the overall burner simplified. The burners applied for a boiler furnace or a chemical industrial furnace.

From the above the present invention is related to a burner with a high efficiency of combustion of any solid fuel, that presents low emission of CO and NOx (for having a good efficiency of combustion), a notable energy efficiency that allows to diminish the consumption of fuel and to generate flames with an excellent form, which reach a major coverage of the glass surface, allowing a major radiation towards the mass of the glass inside the furnace.

Due to the burner is placed through the port, this does not need cooling water and it only requires of air of cooling of low pressure (less than 14 psi), which is provided by a blower for the required external and internal cooling.

On the other hand, due to his design, the burner presents a flame flat and extended in the shape of curtain in the horizontal plane, which allows a very good radiation towards the material that wants to warm up or melt. The velocity and length of flame allow a better use of the energy, reducing the possibility of erosion in the furnace for being of low speed.

The design of the burner provides an excellent mix between the solid material that serves as fuel and the air, oxygen or natural gas of combustion, in order to carry out a very good combustion in furnace. With this, the energy produced by the fuel is used to the maximum, since the whole fuel is burned and allowing to reduce the consumption of the fuel and air in excess that is introduced in the furnaces, to compensate the material that is not reached to burn well with other solid burners.

The burner is of simple manufacture, reducing the times of delivery of the spare parts, as well as, a low manufacture cost.

The burner is of easy installation (without major modifications to the furnaces); it is of easy operation maintenance; it is simple to replace, since the burners are provided with a base that allows them to modify his position with a movement in the axis Y, axis Z and it can fit in the axis XYZ, which allows to adapt the flame in accordance with the needs of the furnace, in a simple way.

The burner of the present invention allows an increase of five times the efficiency of combustion of a solid, and a minimum CO with regard to the burners of the type luminous flame of gas, due to his efficiency of mixed, high time of residence and type of flat flame.

Another advantage is the minor speed of the flow of the solid fuel, which contributes in the glass furnace to a minor dragging of raw materials (carry over), minimizing the problems in the refractories (checkers). The relatively high position with regards to the glass level, minimizes the evaporation of alkalis from the molten glass, improving with it the possible attack of the arch or silica crowns in the furnaces.

The use of a lower speed of the particles makes sure that the impact of the gases be minimized in the exit ports, since it is always minor that the speed of the air of combustion that is used normally in the glass furnaces and this low momentum of the particles assures a null impact in the refractories.

Another advantage achieved with the use of burners of the present invention, is to diminish the NOx in the emissions, as well as, to minimize the attack in crowns or archs --that are manufactured of silica-- in glass furnaces, in order to form less NaOH in the atmosphere of the furnaces.

This type of burner can be used in glass melting furnaces of the type with side ports and end ports. In these cases the burners are placed across the floor of the port, and his height depends on the specific geometry of the port and on the speed of the secondary or combustion air.

Taking in account the above, the present invention is related to a burner for burning a solid fuel such as coal, residues of oil as the petroleum coke or any other solid fuel, to be used in the glass production in a clean environment.

### SUMMARY OF THE INVENTION

Therefore, is a main objective of this invention to provide a burner for solid fuels, which duly carries out the burning of any type of solid fuel and which provides low CO and NOx emissions, due to a very efficient combustion.

Is another objective of the present invention, to provide a burner for solid fuels, which permits to diminish the fuel consume with a major energetic efficiency.

An additional objective of the present invention is to provide a burner for solid fuels, which provides a major coverage of flame on the glass surface so that an improved radiation is achieved towards the glass mass inside the furnace.

Other objective of the present invention is to provide a burner for solid fuels, which provides a complete combustion with CO levels similar to the ones obtained by the natural gas burning process, by increasing the residence time of fuel inside the furnace reducing the speed and duration of the flames.

Another objective of this invention is to provide a burner for solid fuels which is of easy manufacture, high resistance and easy to operate, which allows to keep or improve the conditions of the melting process of glass or another type of material.

In addition, an objective of this invention is to provide a burner for solid fuels, wherein the solid fuel can be mixed with air, oxygen or natural gas, to give other characteristics to the flame that minimize the NOx emissions.

Another objective of the present invention is to provide a burner for solid fuels, with a low construction cost and which allows significant savings on its maintenance and operation.

An additional objective of this invention is to provide a burner for solid fuels, which does not require cooling water and which only uses cooling low-pressure air provided by means of a blower that cools the external and internal areas.

In addition, it is another additional objective of this invention, to provide a burner for solid fuels, which allows an easy assembling and disassembling operation, including a holder, which provides movement to the burner to make operative adjustments and in order to allow instantly the interchange between solid and gas fuel.

These and other additional objectives and advantages of the present invention will be clearly evident to the experts in the field of the following general description of the invention, which will be made in relation to a specific embodiment of the same in an illustrative but not limitative way.

### BRIEF DESCRIPTION OF THE DRAWINGS

Figure 1, is a vertical section view of a section of a glass melting furnace in order to locate this invention;
Figure 2, is a conventional perspective view of the burner for solid fuels in accordance with the present invention;
Figure 3, is a vertical section view of the burner, showing its location with respect to the glass melting furnace;
Figure 4 is a front view of the burner of this invention;
Figure 5 is a lateral view of the burner for solid fuels in accordance with the present invention; and,
Figure 6 is a lateral section view of an interchangeable nozzle of the burner of this invention, taken from line A-A of figure 3.

### DETAILED DESCRIPTION OF THE INVENTION

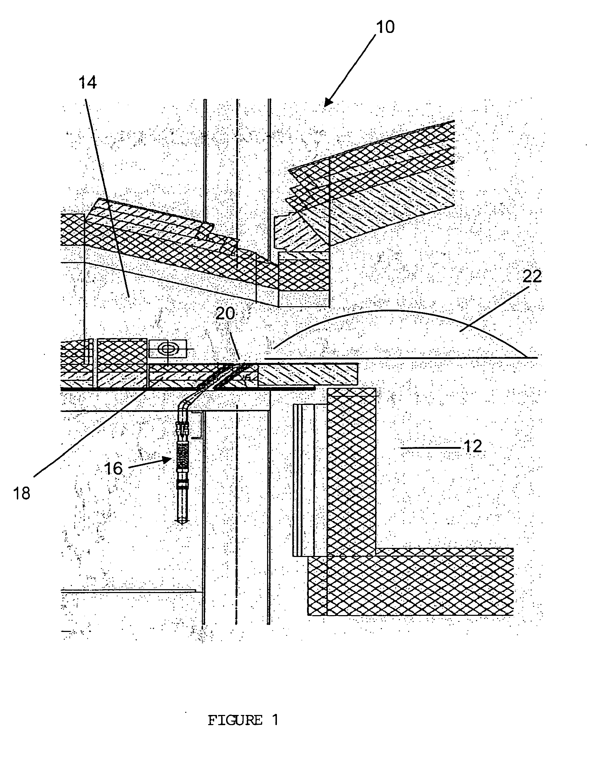

The invention will be described below making reference to one specific embodiment where its sections will be referred by numbers and where figure 1 shows a vertical section view of a glass melting furnace 10 of regenerative type. The section of the glass melting furnace 10 includes a melting chamber 12, with a pair of regenerators (not shown) located each one on each side of the melting chamber 10. The regenerators are provided with burning ports 14, the said burning ports 14 forming a gate between each regenerator and the melting chamber 12, connecting each regenerator (not shown) with the melting chamber 10. The regenerators have a gas regeneration chamber and an air regeneration chamber, which are disposed to connect through gates towards a tunnel and a chimney to exhaust gases. In each burning port 14, a burner 16 is placed to burn fuel, such as natural gas, fuel oil, solid fuel or another type of fuel for glass melting furnaces.

In the embodiment shown in figure 1, the burner 16 of this invention is placed in vertical position, through the lower wall 18 of a burning port 14. Exit end 20 of the burner 16 is placed at the level of the lower wall 18 of the said burning port 14. Therefore, the burning port area 14 is used to carry out a stoichiometric combustion, from which a flame 22 extends generally with an angle direction, from the exit port to the mix of raw material to be melted. It is understood that even if only a burner 16 is described for the furnace 10, this includes several chambers (not shown) by means of which several burners 16 are placed, in opposite direction each other, in order to each 20 or 30 minutes alternatively, depending on the type of furnace, the flame trajectory will be reverted.

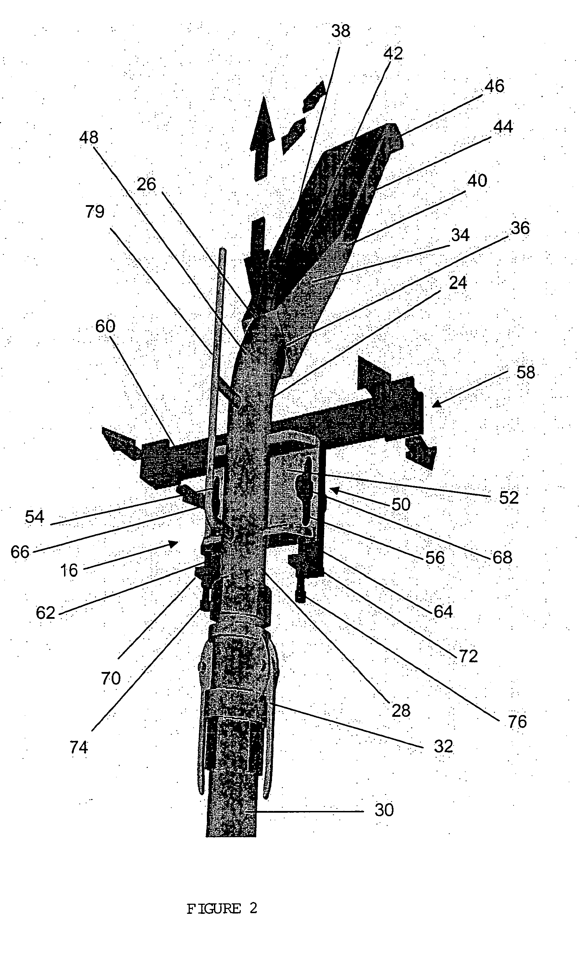

Making now reference to the burner of this invention, which is showed in figures 2 to 5, the burner for solid fuels 16 includes a main tube 24, which has an upper end 26 and lower end 28. A pipeline 30 to provide the solid fuel, which is connected to the lower end 28 of the main tube 24 and which is fastened by means of a fastening system 32. A first hollow distribution chamber 34 through which the solid fuel which comes from the main tube 24 flows, said first chamber 34 having its rear end 36 connected to the upper end 26 of the main tube 24. Uniformly and gradually, the said first hollow distribution chamber 34 is reduced from a larger area 38, which starts from the rear end 36 of the said chamber 34, towards a smaller area 40 in the front section 42 of the same, in order to increase the exit speed of the solid fuel flow supplied from the main tube 24. A second hollow distribution chamber 44, connected to the front side 42 of the first hollow distribution chamber 34, to receive the solid fuel flow of the said first distribution chamber and produce a radiant flat flame with higher speed and high efficiency of solid fuel combustion, with low CO and NOx emissions. The second hollow distribution chamber 44 including an upper section 46, with a light inclination, that is aligned with respect to the level of the lower wall 18 of the said burning port 14. In accordance with an embodiment of this invention, the upper section 46 can be an interchangeable nozzle B1 made of high alumina ceramic material or cast stainless steel.

In accordance with the embodiment illustrated in figures 2 to 5, the tube 24 includes a curved section 48 with an angle of about 50° in the upper section, in such way that the first hollow distribution chamber 34 and the second hollow distribution chamber 44 will be lined up with certain inclination towards the melting chamber 12. In the embodiment of this invention, the second distribution chamber 44 is placed through the lower wall 18 of the burning port 14, in such way that the flame will be projected to the said melting chamber 12 with a speed between 12 and 17 m/s.

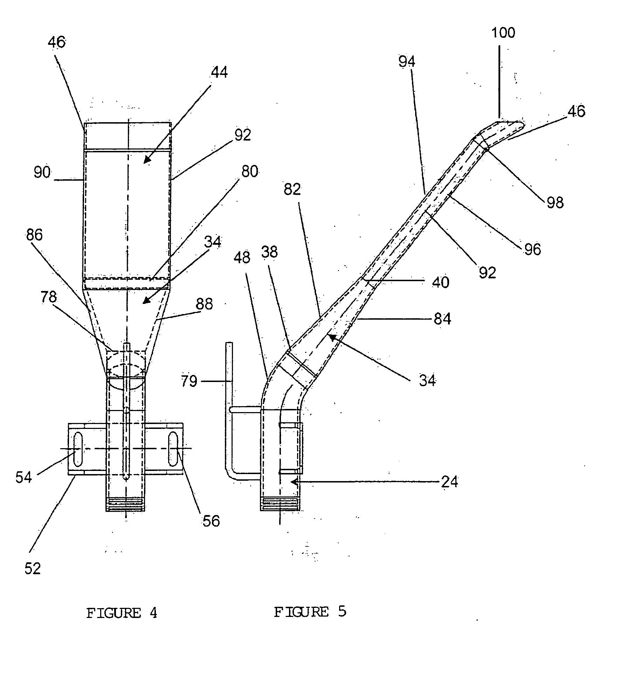

Making now reference to figures 2 and 4, the tube 24 includes in addition a fastening structure 50, which includes a support plate 52, tightly attached to the middle section of the main tube 24. The fastening plate 52 includes grooves 54, 56, in upright position placed at each side of the said plate 52. A fastening support 58 which includes a support arm 60 which is horizontally supported, at the lower section of the wall 18 of the burning port 14, that can be adjusted by means of a backward and forward movement; and, a pair of arms 62, 64, attached to the support arm 60, that are placed in vertical position with respect to said support arm 60. The arms 62, 64 including screws and nuts 66, 68, which are placed to match with the grooves 54, 56, of the fastening plate 52, in order to fix the upright position of the said burner 16. Each support arm 62, 64, including a support plate 70, 72, located in the lower section of the fastening plate 52. The support plate 70, 72 including fastening screws 74, 76, in order to carry out the upright adjustment of burner 16, through the grooves 54, 56.

In this way, the adjustment of the burner 16 with respect to the lower wall 18 of the burning port 14, can be easily moved in the X-, Y- or Z-axis, by adjusting the support 58 position, moving it forward or backward; the upright position by adjusting the fastening plate's 52 elevation with respect to the adjustable support 58; and the Z position of the burner 16 when the X- as well as the Y-axis are adjusted.

Finally, the tube 24 includes a holder 79 so that the operator can easily place and adjust the burner 16.

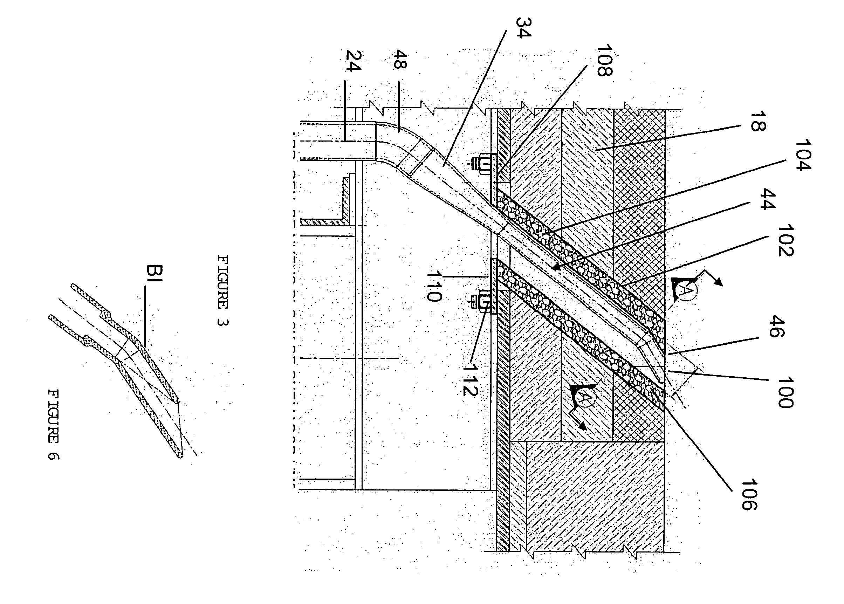

Making now reference to the first hollow distribution chamber 34 (figures 3, 4 and 5), and as it was above mentioned, it includes a large area 38 that is reduced to a smaller area 40, in order to increase the speed of the solid fuel flow. In the embodiment illustrated in figures 4 and 5, the first distribution chamber 34 has a shape like a square truncated pyramid of irregular form, having a rear end 78 with a square periphery; a front end 80 with a enlarged rectangular periphery; a top area 82 and lower area 84 having a narrower end coinciding with the top side and lower side of the rear end 78 with square periphery; and a wider end in coincidence with the larger sections of the front end 80 with enlarged rectangular periphery; and lateral areas 86, 88, which have a wider end coinciding with the sides of the rear end 78 with square periphery; and a narrower end coinciding with the shorter sections of the front end 80 with enlarged rectangular periphery. In this way, the solid fuel flow coming from the tube 24 is conducted to the front section of the first distribution chamber 34 in order to increase the exit speed of the solid fuel.

A second hollow distribution chamber 44, having an enlarged rectangular shape that has access and exit ends, comprising lateral walls 90, 92; an upper wall 94 and lower wall 96. The said second hollow distribution chamber 44, connected by its entry end with the front end 80 of enlarged rectangular periphery of the said first hollow distribution chamber 34. The second hollow distribution chamber 44 having an upper section 46, with a light inclination, to be lined up with respect to the lower wall 18 level of the said burning port 14. The said upper section 46 having a light curvature 98 to change the trajectory of the fuel flow and target the flame 22 in an angular direction towards the interior of the melting chamber 12. The upper section 46 having a plane section 100 lined up with the upper section of the lower wall 18 of the said burning port 14.

In accordance with the embodiment of the burner 16 showed in figures 2 to 5, the solid fuel is provided through a pipeline 30 and passes to the main tube 24 where it is sent to the first hollow distribution chamber 34 to increase the exit speed of the solid fuel, which comes from the pipeline 30. Afterwards, the fuel flow passes to the second hollow distribution chamber 44 and is projected in plane form to be expelled through the upper section 46 of the burner 16, to produce a plane flame, which is extended towards the melting chamber 12. However, even if the use of solid fuel has been described to carry out a process of combustion, said solid fuel can be mixed with air, oxygen or natural gas, to give other characteristics to the flame that minimize the emission of NOx.

Finally, the embodiment of the burner 16 includes a protection structure 102, which has an upper wall 104 and a lower wall 106, the said structure 102 being placed by means of the lower wall 18 of a burning port 14, forming a passage to place the burner 18. The protection structure 102 being used to reduce the heat transfer from the lower wall 18 to the burner 16. The upper and lower walls 104 and 106, fastened by means of fastening plates 108, 110 and screws 112 in the lower section of the lower wall 18.

As seen above, a burner for solid fuels for a melting glass furnace has been described, which is easy installation, service and operation and which has an adjusting structure that allows modifying its position in the X-, Y- or Z-axis. However, it will be clear to the experts in the area, that many others features or improvements could be made, which can be included within the scope determined by the following claims:

## Claims

1. A burner for solid fuels comprising:
a supply tube for feeding a flow of a solid fuel;
a first chamber to receive the solid fuel flow, the said chamber having an entrance and an exit, the entrance of the said distribution chamber being connected to the said tube to receive the solid fuel flow at a first supply speed and to increase the solid fuel supply flow speed at the exit of the said first burner chamber; and,
a second chamber connected to the exit of the first chamber to receive the solid fuel flow at a higher speed and project a plane flame to a melting chamber of a melting glass furnace, with high solid fuel combustion efficiency and low CO and NOx emissions.

2. A burner for solid fuels in accordance with the claim 1, wherein the first chamber having a larger area.

3. A burner for solid fuels in accordance to claim 1, wherein the first chamber exit has a smaller area.

4. A burner for solid fuels in accordance to claim 3, wherein the first chamber exit has a rectangular shape.

5. A burner for solid fuels in accordance to claim 3, wherein the first chamber exit is of an enlarged rectangular shape.

6. A burner for solid fuels in accordance to claim 1, wherein the first chamber has the shape of a square truncated pyramid of irregular form, having an entry end with a square periphery and exit end with an enlarged rectangular periphery; a top area and lower area with a narrower end coinciding with a top side and a lower side of the entry end of the square periphery; and a wider end in coincidence with a top part and a lower part of the area of major length of the exit of the rectangular elongated periphery; and side areas having a wider end in coincidence with the side sides of the end of entry of square periphery; and a narrower end in coincidence with the side parts of minor length of the exit of the enlarged rectangular periphery.

7. A burner for solid fuels in accordance to claim 1, wherein the main tube comprises a curved section with an angle of about 50° to place the first and second chambers with an inclination oriented towards a melting furnace chamber.

8. A burner for solid fuels in accordance to claim 1, wherein the burner further comprises: fastening means connected to the main tube to adjust the burner position on an X-, Y- or Z-axis.

9. A burner for solid fuels in accordance to claim 8, wherein the fastening means comprises: a fastening plate attached to the main tube, said fastening plate including grooves in upright position, placed at each side of the said fastening plate; an adjustable support in horizontal position, to adjust the burner by means of a backward and forward movement, said support including a pair of arms in upright position with respect to the adjustable support, said pair of arms including fastening means placed coinciding with the grooves of the adjustable plate to fix the upright position of the burner, and adjusting means placed at the lower section of such arms, to adjust the vertical position of the burner with upward or downward movement through the grooves of the adjustable plate.

10. A burner for solid fuels in accordance to claim 1, wherein the second chamber has a enlarged rectangular shape, said second chamber having a rear and a frontal end, said second chamber being connected by its back end with the exit of the first chamber, the front end of the second chamber having a section with a light inclination to be lined up with respect to the level of a lower wall of a burning port of the melting glass furnace to change the solid fuel flow trajectory and project the combustion flame in an angle direction towards the melting chamber.

11. A burner for solid fuels in accordance to claim 10, wherein the front end of said second chamber comprises a plane section that is lined up with the lower wall of said burning port.

12. A burner for solid fuels in accordance to claim 1, wherein the main tube comprises a handle to allow adjusting the burner.

13. A burner for solid fuels in accordance to claim 1, wherein the tube is attached to a solid fuel-supplying pipeline by means of a fastening system.

14. A burner for solid fuels in accordance to claim 1, wherein the second chamber includes an interchangeable section to supply the plane flame to the melting chamber of the melting glass furnace.

15. A burner for solid fuels in accordance to claim 14, wherein the interchangeable section is an interchangeable nozzle.

16. A burner for solid fuels in accordance to claim 15, wherein the interchangeable nozzle is of high alumina ceramic or cast stainless steel.

17. A burner for solid fuels in accordance to claim 1, wherein the burner is placed between a protective structure, said protective structure having an upper wall and a lower wall which forms a passage in the lower wall of the burning port, to reduce the heat transfer from the lower wall to the burner.

18. A method for burning solid fuels in a melting glass furnace, the method comprising the steps of:
supplying a solid fuel flow to the entry of a first burner chamber with an initial supply speed and increasing the solid fuel supply flow speed in an exit end of said first burner chamber; and
supplying the supply flow faster from the exit end of the first chamber towards a second chamber to project a plane flame towards a melting chamber of the melting glass furnace, with a high solid fuel combustion efficiency and low CO and NOx emissions.

19. The method for burning solid fuels in accordance to claim 18, wherein the solid fuel is petroleum coke.

20. The method for burning solid fuels in accordance to claim 18, wherein the solid fuel is mixed with air.

21. The method for burning solid fuels in accordance to claim 18, wherein the solid fuel is mixed with oxygen.

22. The method for burning solid fuels in accordance to claim 18, wherein the solid fuel is mixed with natural gas.

23. The method for burning solid fuels in accordance to claim 18, wherein the flame is projected with an angle direction towards the interior of the melting chamber.

24. The method for burning solid fuels in accordance to claim 18, wherein the flame speed is between 12 and 17 m/s.

25. The method for burning solid fuels in accordance to claim 18, wherein the method further comprises: adjusting the position of the burner in an X-, Y- or Z-axis to adjust the flame trajectory with respect to the melting chamber.

## Amended claims

### Amended claims under Art. 19.1 PCT

1. A burner for burning pulverized fuel in a glass melting furnace comprising:
a supply tube (24) for feeding a flow of a pulverized fuel;
a first chamber (34) having an inlet end (78) with a square cross section and an outlet end (80) with a rectangular cross-section positioned in a horizontal direction, the inlet end (78) being connected to said supply tube (24), the cross-section of said first chamber (34) being reduced from the inlet end to the outlet end for increasing the velocity of the flow of the pulverized fuel at the outlet from said first chamber;
a second chamber (44) of a rectangular form which is coupled to the outlet of the first chamber (34) for receiving the flow of the pulverized fuel and for projecting a flat flame towards a melting chamber (12) of the glass melting furnace (10), with a high solid-fuel combustion efficiency and low CO and NOx emissions; and,
adjusting means (50) coupled to the a supply tube (24) to adjust the position of the burners in the glass melting furnace in a direction of X,Y, Z axes.

2. A burner as claimed in claim 1, wherein the second chamber (44) includes a slightly inclinated section (46) at its outlet end, which is aligned in relation to a wall of the glass melting furnace (10), to change the flow trajectory of the pulverized fuel and for projecting a combustion flame in angular direction toward the internal part of the glass melting furnace.

3. A burner as claimed in claim 2, wherein the slightly inclinated section of the second chamber is a interchangeable section (BI).

4. A burner as claimed in claim 3, wherein the interchangeable section is a interchangeable nozzle (BI).

5. A burner as claimed in claim 4, wherein the interchangeable nozzle is manufactured from a ceramic material of high alumina content or of cast stainless steel.

6. A burner as claimed in claim 1, wherein the adjusting means (50) comprises:
A support plate (52) fixed to the supply tube (24), said support plate (52) being adjustable by means of vertical slots (54, 56) located to each side of the support plate (52); an adjusting support (58) located in horizontal position for adjusting the burner with a forward and backward movement, said adjusting support (58) including two arms (62, 64) positioned in vertical position with regards to the adjusting support, said arms (62, 64) including fastening means (66, 68), said fastening means being placed in coincidence with the slots (54, 56) of the support plate (52) in order to selectively fix the vertical position of said burner; and adjusting means (74, 76) placed in a lower part of said arms (62, 64) to adjust the vertical position of the burner with and upward and downward movement through said slots (54, 56) of the support plate (52).

7. A method for burning a pulverized fuel from a burner in a glass melting furnace, the method including the steps of:
a) introducing a first flow of a pulverized fuel to the inlet of a first chamber (34) having an inlet end (78) with a square cross-section and an outlet end (80) with a rectangular cross-section positioned in a horizontal direction, the inlet end (78) being connected to said supply tube (24), so the velocity of the flow of pulverized fuel being increased from the inlet end to the outlet end from said first chamber;
b) projecting the flow of the pulverized fuel from the first chamber (34) to a second chamber (44) of a rectangular form in a forward direction to introduce the flow of the pulverized fuel in said second chamber and for projecting a flat flame towards a melting chamber (12) of the glass melting furnace (10) with a high solid-fuel combustion efficiency and low CO and NOx emissions; and,
c) adjusting the position of the burner, which is coupled to a supply tube (24) of pulverized fuel, to adjust the position of the burner in the glass melting furnace in a direction of X, Y, Z axes.

8. A method for burning a pulverized fuel as claimed in claim 7, wherein the pulverized fuel is mixed with air.

9. A method for burning a pulverized fuel as claimed in claim 7, wherein the pulverized fuel is mixed with oxygen.

10. A method for burning a pulverized fuel as claimed in claim 7, wherein the pulverized fuel is mixed with natural gas.
